# EUROPEAN PATENT SPECIFICATION

(11) **EP 4 501 592 B1**
(45) Date of publication and mention of the grant of the patent: **01.04.2026**
(21) Application number: 23892021.9
(22) Date of filing: 15.11.2023
(51) Int. Cl.: B29C 65/00, H01M 50/105, H01M 50/124, H01M 50/121, H01M 50/119, H01M 50/183, B29C 65/02, B29C 65/18, B29C 65/48, H01M 10/04, H01M 50/186, B29L 31/34, B29K 705/02, B29L 31/00

(54) **POUCH-SHAPED BATTERY CELL SEALING APPARATUS INCLUDING PAIR OF SEALING ROLLERS, SEALING METHOD USING THE SAME, AND POUCH-SHAPED BATTERY CELL MANUFACTURED USING THE SAME**
BEUTELARTIGE BATTERIEZELLENDICHTUNGSVORRICHTUNG MIT EINEM PAAR DICHTROLLEN, DICHTUNGSVERFAHREN DAMIT UND DAMIT HERGESTELLTE BEUTELARTIGE BATTERIEZELLE
DISPOSITIF DE SCELLAGE DE CELLULES DE BATTERIE DE TYPE POCHE COMPRENANT UNE PAIRE DE ROULEAUX DE SCELLAGE, PROCÉDÉ DE SCELLAGE UTILISANT CELUI-CI, ET CELLULE DE BATTERIE DE TYPE POCHE FABRIQUÉE A L'AIDE DE CELUI-CI

(30) Priority: 15.11.2022 KR 20220152306
(43) Date of publication of application: 05.02.2025
(73) Proprietor: LG Energy Solution, Ltd., Seoul 07335 (KR)
(72) Inventor: LIM, Si Hyoun, Daejeon 34122 (KR); SEO, Tai Joon, Daejeon 34122 (KR)
(74) Representative: Plasseraud IP
(86) International application number: PCT/KR2023/018397
(87) International publication number: WO 2024/106956

(56) References cited:
- JP-A- 2012 529 184
- KR-A- 20110 039 011
- KR-A- 20110 039 011
- KR-A- 20150 045 097
- KR-A- 20160 073 097
- KR-A- 20220 065 707
- KR-A- 20220 100 422
- KR-B1- 101 838 315

## Description

### [Technical Field]

The present invention relates to a pouch-shaped battery cell sealing apparatus including a pair of sealing rollers, a sealing method using the same, and a pouch-shaped battery cell manufactured using the same. More particularly, the present invention relates to a pouch-shaped battery cell sealing apparatus including a pair of sealing rollers capable of rapidly discharging gas when the internal pressure of a pouch-shaped battery cell increases, thereby preventing explosion of the pouch-shaped battery cell, a sealing method using the same, and a pouch-shaped battery cell manufactured using the same.

### [Background Art]

A lithium secondary battery, which is capable of being charged and discharged, has been widely used as an energy source for wireless mobile devices or wearable devices, which are worn on bodies, and has also been used as an energy source for electric vehicles and hybrid electric vehicles presented as alternatives to existing gasoline and diesel vehicles, which cause air pollution.

The lithium secondary battery may be classified as a prismatic battery cell including a metal can-shaped case, a cylindrical battery cell including a metal can-shaped case, or a pouch-shaped battery cell including a case formed of a laminate sheet. Thereamong, the pouch-shaped battery cell is most commonly used due to easy deformation and an increase in energy density when stored and stacked.

In the lithium secondary battery, a side reaction occurs between the surface of an electrode and an electrolytic solution during repeated charging and discharging, and if gas generated at this time is not discharged from the battery case, the battery case may swell or may be deformed.

In particular, since the pouch-shaped battery cell includes no separate venting structure, unlike the cylindrical battery cell, which includes a safety vent, venting may occur at a part of a thermally fused outer periphery at which gas is concentrated or adhesion due to thermal fusion is low.

In general, the pouch-shaped battery cell is manufactured by shaping a laminated sheet including an outer resin layer, a metal layer, and an inner adhesive layer into a pouch-shaped battery case, receiving an electrode assembly in the pouch-shaped battery case, and sealing the pouch-shaped battery case.

The laminate sheet may have a more complex and varied layered structure depending on implementation of the laminate sheet and the environment to which the laminate sheet is applied.

In order to seal the pouch-shaped battery case, an outer periphery of the pouch-shaped battery case is pressed using a heating block configured to provide heat and pressure. As a result, the inner adhesive layer is melted, whereby inner adhesive layers of an upper case and a lower case, which are stacked on top of each other, are thermally fused to form a seal.

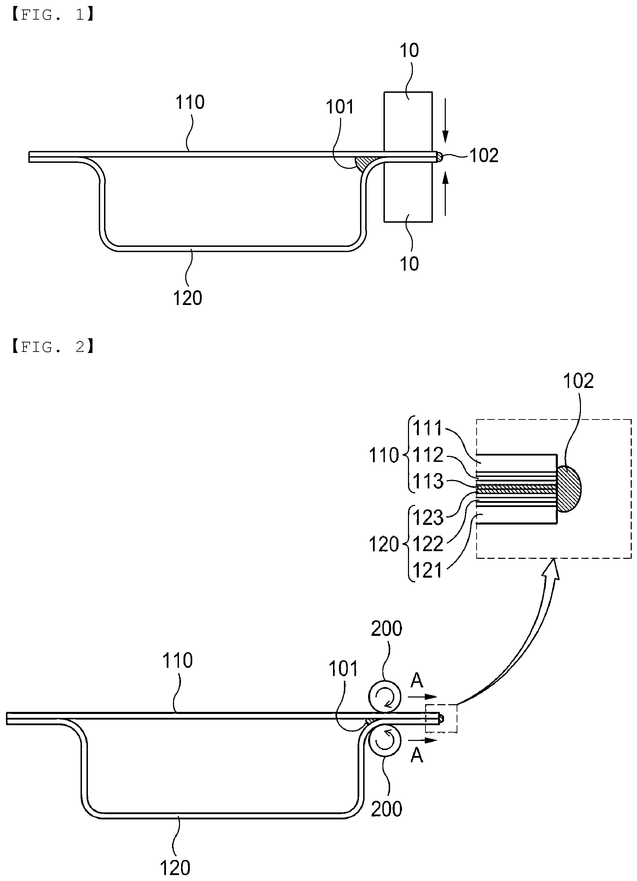

FIG. 1 is a front view of a conventional pouch-shaped battery cell and an apparatus for sealing the same.

Referring to FIG. 1, a pouch-shaped battery case includes an upper case 110 and a lower case 120. Outer peripheries of the upper case 110 and the lower case 120 are disposed between a pair of sealing tools 10, and then pressed and heated with the pair of sealing tools 10 to form a sealed portion. Each of the upper case 110 and the lower case 120 is made of a laminate sheet in which an outer resin layer, a metal layer, and an inner adhesive layer are sequentially laminated, and the inner adhesive layer of the upper case 110 and the inner adhesive layer of the lower case 120 are melted.

Under the pressure of the sealing tools 10, which heat and press the sealed portion, the melted inner adhesive layers are pushed inward and outward relative to the sealed portion, whereby an inner polyball 101 and an outer polyball 102 are formed.

The pair of sealing tools 10 is configured to press the entire area of the sealed portion at once, and the size of the inner polyball 101 is formed so as to be greater than the size of the outer polyball 102 since there is a lot of movement of the inner adhesive layer in an inward direction where a wide empty space is formed in a direction toward an electrode assembly receiving portion. When the inner polyball 101 has a larger size, as described above, venting of the pouch-shaped battery case is difficult even though the internal pressure of the pouch-shaped battery cell increases, whereby the pressure in the pouch-shaped battery case gradually increases.

If external impact is applied to the pouch-shaped battery case while the pouch-shaped battery case continuously swells or if a chemical chain reaction, such as thermal runaway, occurs due to electrical short circuit, the pouch-shaped battery cell may explode.

In this regard, Patent Document 1 relates to a battery cell including a battery case made of a laminate sheet having a structure in which a first resin layer, a metal layer, and a second resin layer are sequentially laminated, wherein the laminate sheet includes a first sheet portion and a second sheet portion facing each other to form a surplus sealed portion, and at least a part of the surplus sealed portion includes a resin layer fusion portion formed by the first resin layer of the first sheet portion and the first resin layer of the second sheet portion and a metal layer weld portion formed by an end of the metal layer of the first sheet portion and an end of the metal layer of the second sheet portion.

Also, in Patent Document 1, a first sealing tool and a second sealing tool with a semicircular shape convex in directions toward the first sheet portion and the second sheet portion are used, in a sealed portion formed by the first sealing tool and the second sealing tool, a resin layer fusion portion is formed inside the sealed portion adjacent to an electrode assembly, whereby sealing force of the battery cell is increased.

Therefore, there is a need to develop an apparatus for sealing a pouch-shaped battery cell configured to have a structure in which the sealing pressure of a sealed portion formed at an outer periphery of a pouch-shaped battery case is nonuniform, whereby venting easily occurs, a sealing method using the same, and a pouch-shaped battery cell manufactured using the same.

### (Prior Art Document)

(Patent Document 1) Korean Patent Application Publication No. 2016-0073097 (2016.06.24)

Documents KR 2011 0039011 A and KR 101 838 315 B1 disclose apparatuses and methods for sealing pouch-type battery cells that use sealing rollers.

### [Disclosure]

### [Technical Problem]

The present invention has been made in view of the above problems, and it is an object of the present invention to provide a pouch-shaped battery cell sealing apparatus capable of reducing the thickness of an inner adhesive layer of a sealed portion of a pouch-shaped battery cell such that venting can easily occur by reducing a venting pressure in the sealed portion, a sealing method using the same, and a pouch-shaped battery cell manufactured using the same.

### [Technical Solution]

A pouch-shaped battery cell sealing apparatus according to the present invention to accomplish the above object includes a pair of sealing rollers configured to press and roll an upper part and a lower part of a sealed portion of a pouch-shaped battery cell, respectively, wherein the pair of sealing rollers includes a first sealing roller and a second sealing roller, and the pair of sealing rollers are configured to seal the sealed portion while moving in a direction from the inside to the outside of the sealed portion.

The first sealing roller may be rotated about a rotation axis in a first direction, and the second sealing roller may be rotated about a rotation axis in a second direction opposite the first direction.

The first sealing roller and the second sealing roller may be configured to press the sealed portion, the first and second sealing rollers being in a heated state.

The heating temperature of each of the first and second sealing rollers may be higher than the melting temperature of an inner adhesive layer of a laminate sheet constituting the pouch-shaped battery cell.

The diameter of each of the first and second sealing rollers may be 50% or less than the width of the sealed portion.

There is provided a pouch-shaped battery cell sealing method using the pouch-shaped battery cell sealing apparatus, the pouch-shaped battery cell sealing method including (a) disposing a sealed portion of a pouch-shaped battery cell between a pair of sealing rollers and (b) moving the pair of sealing rollers from the inside to the outside of the sealed portion while independently rotating a first sealing roller and a second sealing roller constituting the pair of sealing rollers, wherein, in step (b), the pair of sealing rollers is rotated and moved in a heated state.

Each of the first and second sealing rollers may have a rotation speed being the same, wherein each of the first and second sealing rollers has a movement speed being the same, the first sealing roller may be rotated and moved while downwardly pressing the sealed portion, and the second sealing roller may be rotated and moved while upwardly pressing the sealed portion.

In the sealed portion, an inner adhesive layer of a laminate sheet of the sealed portion may be melted and moved in a direction toward the outside of the sealed portion by the pair of sealing rollers.

The pair of sealing rollers may move along a direction from the inside to the outside of the sealed portion, so as to move a portion of the inner adhesive layer in a molten state to an outer end of the sealed portion.

There is provided a pouch-shaped battery cell manufactured using the pouch-shaped battery cell sealing apparatus, wherein the pouch-shaped battery cell includes a pouch-shaped battery case including a laminate sheet including an outer resin layer, a metal layer, and an inner adhesive layer, the pouch-shaped battery case has a sealed portion including a portion of the inner adhesive layer in a thermally fused state and disposed at outer peripheries of an upper case and a lower case, the portion of the inner adhesive layer melted by the pair of sealing rollers of the pouch-type battery cell sealing apparatus is pushed to the inside and the outside of the sealed portion to form an inner polyball and an outer polyball, and the size of the outer polyball is greater than the size of the inner polyball.

An end surface of the metal layer of the pouch-shaped battery case may not be exposed by the outer polyball.

In addition, the present invention may provide various combinations of the above solving means.

### [Advantageous Effects]

As is apparent from the above description, in the present invention, an inner adhesive layer of a laminate sheet in a sealed portion of a pouch-shaped battery cell is melted and moved to an outside of the sealed portion, whereby the size of an outer polyball formed at the outside of the sealed portion is formed so as to be greater than the size of an inner polyball formed at an inside of the sealed portion.

Therefore, venting may easily occur even in the state in which the pressure in the pouch-shaped battery cell is low, whereby it is possible to prevent swelling and deformation of the pouch-shaped battery cell and prevent explosion of the pouch-shaped battery cell.

### [Description of Drawings]

FIG. 1 is a front view of a conventional pouch-shaped battery cell and an apparatus for sealing the same.
FIG. 2 is a front view and an enlarged perspective view of a pouch-shaped battery cell according to the present invention.
FIG. 3 is a flowchart of a pouch-shaped battery cell sealing method according to the present invention.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but means that such elements may be further included unless mentioned otherwise.

In addition, a description to embody elements through limitation or addition may be applied to all inventions, unless particularly restricted, and does not limit a specific invention.

Also, in the description of the invention and the claims of the present application, singular forms are intended to include plural forms unless mentioned otherwise.

Also, in the description of the invention and the claims of the present application, "or" includes "and" unless mentioned otherwise. Therefore, "including A or B" means three cases, namely, the case including A, the case including B, and the case including A and B.

Embodiments of the present invention will be described in detail with reference to the accompanying drawings.

A pouch-shaped battery cell includes a pouch-shaped battery case made of a laminate sheet including an outer resin layer 111 or 121, a metal layer 112 or 122, and an inner adhesive layer 113 or 123, wherein the pouch-shaped battery case includes an upper case 110 and a lower case 120. The upper case 110 and the lower case 120 may be formed as a single member in which the upper case and the lower case are connected to each other at an outer periphery of one side of each thereof, or an upper case and a lower case separated from each other may be coupled to each other by thermal fusion to form a sealed portion.

The outer resin layer may include polyethylene terephthalate or stretched nylon, aluminum or an aluminum alloy may be used as the metal layer, and the inner adhesive layer may include polypropylene.

FIG. 2 is a front view and an enlarged perspective view of a pouch-shaped battery cell according to the present invention.

Referring to FIG. 2, the pouch-shaped battery cell sealing apparatus according to the present invention includes a pair of sealing rollers 200 configured to press and roll an upper part and a lower part of a sealed portion of a pouch-shaped battery cell, respectively, wherein the pair of sealing rollers 200 includes a first sealing roller and a second sealing roller, and the pair of sealing rollers 200 seals the sealed portion of the pouch-shaped battery cell while moving in a direction from an inside to an outside of the sealed portion, such as in direction A.

At this time, the first sealing roller is rotated about a rotation axis in a first direction, and the second sealing roller is rotated about a rotation axis in a second direction, which is opposite the first direction. If the first direction is clockwise, the second direction is counterclockwise, and if the first direction is counterclockwise, the second direction is clockwise.

In the case of FIG. 2, in which the first sealing roller is rotated clockwise and the second sealing roller is rotated counterclockwise, the first sealing roller and the second sealing roller are moved in direction A simultaneously with the clockwise and counterclockwise rotation.

The first sealing roller and the second sealing roller press the sealed portion in a heated state. The heating temperature of each of the first sealing roller and the second sealing roller is higher than the melting temperature of the inner adhesive layers 113 and 123 of the laminate sheet constituting the pouch-shaped battery cell. In view of the use of polypropylene as a component of each inner adhesive layer in general, the temperature of each of the first sealing roller and the second sealing roller may be 100°C to 200°C.

When the laminate sheet is pressed and heated by the first sealing roller and the second sealing roller, therefore, the inner adhesive layers 113 and 123 are melted, and the inner adhesive layers 113 and 123 are pushed in direction A in a melted state. When the inner adhesive layers are melted, pushed to the outside of the sealed portion, and solidified in a moved state, the inner adhesive layers form a round ball-shaped mass. Since such a round ball-shaped mass is formed as the result of the inner adhesive layers including the polymer material being melted and solidified, the round ball-shaped mass is called a polyball in this specification.

When the sealed portion is first pressed with the pair of sealing rollers, however, the molten inner adhesive layers are moved inward and outward from the part of the sealed portion in contact with the pair of sealing rollers, and at least a part of each of the inner adhesive layers 113 and 123 may be moved in a direction toward an electrode assembly receiving portion, which is opposite direction A.

As a result, the molten materials of the inner adhesive layers 113 and 123 melted by the pair of sealing rollers 200 of the pouch-shaped battery cell sealing apparatus are pushed to the inside and the outside of the sealed portion, respectively, to form an inner polyball 101 and an outer polyball 102. However, since the pair of sealing rollers 200 pushes the molten inner adhesive layers 113 and 123 in a direction toward the outside of the sealed portion while being moved in direction A, the size of the outer polyball 102 is formed so as to greater than the size of the inner polyball 101.

Meanwhile, the pair of sealing rollers 200 is moved in the direction from the inside to the outside of the sealed portion until the molten inner adhesive layers is moved to an outer end of the sealed portion, and the outer polyball 102 protrudes outward from outer peripheral ends of the upper case 110 and the lower case 120 to form a round ball shape. Consequently, the outer polyball 102 is added to end surfaces of the metal layers 112 and 122. Since the end surfaces of the metal layers 112 and 122 are not exposed, as described above, it is possible to prevent corrosion of the metal layers 112, 122 due to exposure thereof.

Meanwhile, in the pair of sealing rollers 200, the diameter of each of the first sealing roller and the second sealing roller may be 50% or less of the width of the sealed portion.

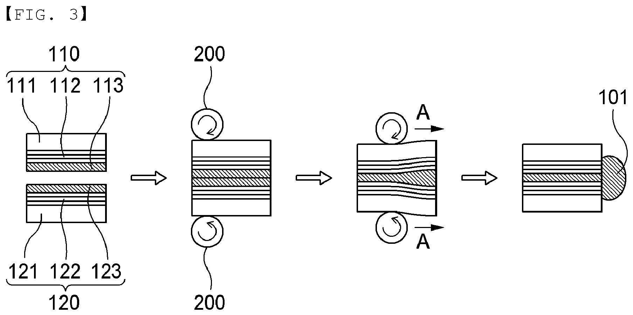

FIG. 3 is a flowchart of a pouch-shaped battery cell sealing method according to the present invention.

Referring to FIG. 3, the pouch-shaped battery cell sealing method using the pouch-shaped battery cell sealing apparatus according to the present invention includes disposing an upper case 110 and a lower case 120 so as to face each other, (a) disposing a sealed portion of a pouch-shaped battery cell between a pair of sealing rollers 200, and (b) moving the pair of sealing rollers 200 from an inside to an outside of the sealed portion in direction A while independently rotating a first sealing roller and a second sealing roller constituting the pair of sealing rollers 200, wherein, in step (b), the pair of sealing rollers 200 may be rotated and moved in a heated state.

In the first step shown in FIG. 3, the pair of sealing rollers 200 is not disposed, and sealed portions of the upper case 110 and the lower case 120 are disposed so as to face each other. In FIG. 3, a gap is shown to be formed between the upper case 110 and the lower case 120 for ease of description, but the upper case and the lower case may be in tight contact with each other.

The first sealing roller and the second sealing roller have the same rotation speed and movement speed, the first sealing roller is rotated and moved while downwardly pressing the sealed portion, and the second sealing roller is rotated and moved while upwardly pressing the sealed portion.

In this process, in the sealed portion, the inner adhesive layer of the laminate sheet is melted and moved in a direction toward the outside of the sealed portion by the pair of sealing rollers.

The first sealing roller and the second sealing roller are moved in direction A while pressing the upper case 110 and the lower case 120 in a direction in which the first sealing roller and the second sealing roller approach each other in the state in which the first sealing roller and the second sealing roller are disposed at the same position in the vertical direction, and in the part pressed by the pair of sealing rollers 200, the inner adhesive layers 113 and 123 melt and consolidate and the thickness thereof is reduced. When sealing of the sealed portion is completed by the pair of sealing rollers 200, therefore, the molten materials constituting the inner adhesive layers 113 and 123 are agglomerated and solidified at the outer end of the sealed portion to form the outer polyball 102.

At this time, the inner adhesive layers 113 and 123 are fused to each other, and the thickness of the inner adhesive layers 113 and 123 after fusion is less than the sum of the thicknesses of the inner adhesive layers 113 and 123 before fusion, and a polyball is formed by the reduced thickness of the inner adhesive layers 113 and 123.

The thickness of the inner adhesive layers 113, 123 is reduced after fusion, as described above, and therefore the sealing force between the upper case 110 and the lower case 120 is reduced.

That is, the sealing force of the pouch-shaped battery case is increased as the thickness of the inner adhesive layers 113 and 123 is increased and the size of the inner polyballs is increased. As in the present invention, therefore, the sealing force of the pouch-shaped battery case may be reduced by not only reducing the thickness of the inner adhesive layers 113 and 123 but also increasing the size of the outer polyball 102 so as to be greater than the size of the inner polyball 101.

When the pouch-shaped battery cell according to the present invention is used, therefore, rapid venting may be achieved even though the internal pressure of the pouch-type battery cell is low, whereby it is possible to prevent problems such as explosion due to delayed venting of the pouch-shaped battery cell.

### (Description of Reference Numerals)

10: Sealing tool
101: Inner polyball
102: Outer polyball
110: Upper case
111, 121: Outer resin layers
112, 122: Metal layers
113, 123: Inner adhesive layers
120: Lower case
200: Pair of sealing rollers

## Claims

1. A pouch-shaped battery cell sealing apparatus comprising:
a pair of sealing rollers (200) configured to press and roll an upper part and a lower part of a sealed portion of a pouch-shaped battery cell, respectively,
wherein the pair of sealing rollers (200) comprises a first sealing roller and a second sealing roller,
**characterized in that** the pair of sealing rollers (200) are configured to seal the sealed portion while moving in a direction from an inside to an outside of the sealed portion.

2. The pouch-shaped battery cell sealing apparatus according to claim 1, wherein
the first sealing roller is rotated about a rotation axis in a first direction, and
the second sealing roller is rotated about a rotation axis in a second direction opposite the first direction.

3. The pouch-shaped battery cell sealing apparatus according to claim 1, wherein the first sealing roller and the second sealing roller are configured to press the sealed portion, the first and second sealing rollers being in a heated state.

4. The pouch-shaped battery cell sealing apparatus according to claim 3, wherein a heating temperature of each of the first and second sealing rollers is higher than a melting temperature of an inner adhesive layer (113, 123) of a laminate sheet constituting the pouch-shaped battery cell.

5. The pouch-shaped battery cell sealing apparatus according to claim 1, wherein a diameter of each of the first and second sealing rollers is 50% or less than a width of the sealed portion.

6. A pouch-shaped battery cell sealing method using the pouch-shaped battery cell sealing apparatus according to any one of claims 1 to 5, the pouch-shaped battery cell sealing method comprising:
(a) disposing a sealed portion of a pouch-shaped battery cell between a pair of sealing rollers (200); **characterized in that** the method further comprises:
(b) moving the pair of sealing rollers (200) from an inside to an outside of the sealed portion while independently rotating a first sealing roller and a second sealing roller constituting the pair of sealing rollers, wherein
in step (b), the pair of sealing rollers (200) is rotated and moved in a heated state.

7. The pouch-shaped battery cell sealing method according to claim 6, wherein
each of the first and second sealing rollers has a rotation speed being the same,
wherein each of the first and second sealing rollers has a movement speed being the same,
the first sealing roller is rotated and moved while downwardly pressing the sealed portion, and
the second sealing roller is rotated and moved while upwardly pressing the sealed portion.

8. The pouch-shaped battery cell sealing method according to claim 6, wherein, in the sealed portion, an inner adhesive layer (113, 123) of a laminate sheet of the sealed portion is melted and moved in a direction toward the outside of the sealed portion by the pair of sealing rollers (200).

9. The pouch-shaped battery cell sealing method according to claim 8, wherein the pair of sealing rollers (200) move along a direction from the inside to the outside of the sealed portion, so as to move a portion of the inner adhesive layer (113, 123) in a molten state to an outer end of the sealed portion.

10. A pouch-shaped battery cell manufactured using the pouch-shaped battery cell sealing apparatus according to any one of claims 1 to 5, wherein
the pouch-shaped battery cell comprises a pouch-shaped battery case including a laminate sheet comprising an outer resin layer (111, 121), a metal layer (112, 122), and an inner adhesive layer (113, 123),
the pouch-shaped battery case has a sealed portion including a portion of the inner adhesive layer (113, 123) in a thermally fused state and disposed at outer peripheries of an upper case (110) and a lower case (120),
**characterized in that** the portion of the inner adhesive layer (113, 123) melted by the pair of sealing rollers (200) of the pouch-type battery cell sealing apparatus is pushed to an inside and an outside of the sealed portion to form an inner polyball and an outer polyball, and
a size of the outer polyball is greater than a size of the inner polyball.

11. The pouch-shaped battery cell according to claim 10, wherein an end surface of the metal layer (112, 122) of the pouch-shaped battery case is not exposed by the outer polyball.

## Patentansprüche

1. Versiegelungsvorrichtung für eine beutelförmige Batteriezelle, umfassend:
ein Paar von Versiegelungsrollen (200), welche dazu eingerichtet sind,
einen oberen Teil bzw. einen unteren Teil eines versiegelten Abschnitts einer beutelförmigen Batteriezelle zu pressen und zu rollen,
wobei das Paar von Versiegelungsrollen (200) eine erste Versiegelungsrolle und eine zweite Versiegelungsrolle umfasst,
**dadurch gekennzeichnet, dass** das Paar von Versiegelungsrollen (200) dazu eingerichtet sind, den versiegelten Abschnitt zu versiegeln, während sie sich in einer Richtung von einer Innenseite zu einer Außenseite des versiegelten Abschnitts bewegen.

2. Versiegelungsvorrichtung für eine beutelförmige Batteriezelle nach Anspruch 1, wobei
die erste Versiegelungsrolle um eine Rotationsachse in einer ersten Richtung rotiert wird, und
die zweite Versiegelungsrolle um eine Rotationsachse in einer zweiten Richtung entgegengesetzt zu der ersten Richtung rotiert wird.

3. Versiegelungsvorrichtung für eine beutelförmige Batteriezelle nach Anspruch 1, wobei die erste Versiegelungsrolle und die zweite Versiegelungsrolle dazu eingerichtet sind, den versiegelten Abschnitt zu pressen, wobei die ersten und zweiten Versiegelungsrollen in einem erwärmten Zustand sind.

4. Versiegelungsvorrichtung für eine beutelförmige Batteriezelle nach Anspruch 3, wobei eine Erwärmungstemperatur von jeder aus den ersten und zweiten Versiegelungsrollen höher als eine Schmelztemperatur einer inneren Haftschicht (113, 123) einer Laminatbahn ist, welche die beutelförmige Batteriezelle bildet.

5. Versiegelungsvorrichtung für eine beutelförmige Batteriezelle nach Anspruch 1, wobei ein Durchmesser von jeder der ersten und zweiten Versiegelungsrollen 50% oder weniger einer Breite des versiegelten Abschnitts beträgt.

6. Versiegelungsverfahren für eine beutelförmige Batteriezelle unter Verwendung der Versiegelungsvorrichtung für eine beutelförmige Batteriezelle nach einem der Ansprüche 1 bis 5, wobei das Versiegelungsverfahren für eine beutelförmige Batteriezelle umfasst:
(a) Anordnen eines versiegelten Abschnitts einer beutelförmigen Batteriezelle zwischen einem Paar von Versiegelungsrollen (200);
**dadurch gekennzeichnet, dass** das Verfahren ferner umfasst:
(b) Bewegen des Pars von Versiegelungsrollen (200) von einer Innenseite zu einer Außenseite des versiegelten Abschnitts, während eine erste Versiegelungsrolle und eine zweite Versiegelungsrolle, welche das Paar von Versiegelungsrollen bilden, unabhängig rotiert werden, wobei in Schritt (b) das Paar von Versiegelungsrollen (200) in einem erwärmten Zustand rotiert und bewegt wird.

7. Versiegelungsverfahren für eine beutelförmige Batteriezelle nach Anspruch 6, wobei
jede aus den ersten und zweiten Versiegelungsrollen eine Rotationsgeschwindigkeit aufweist, welche dieselbe ist,
wobei jede aus den ersten und zweiten Versiegelungsrollen eine Bewegungsgeschwindigkeit aufweist, welche dieselbe ist,
die erste Versiegelungsrolle rotiert und bewegt wird, während sie nach unten den versiegelten Abschnitt presst, und
die zweite Versiegelungsrolle rotiert und bewegt wird, während sie nach oben den versiegelten Abschnitt presst.

8. Versiegelungsverfahren für eine beutelförmige Batteriezelle nach Anspruch 6, wobei in dem versiegelten Abschnitt eine innere Haftschicht (113, 123) einer Laminatbahn des versiegelten Abschnitts geschmolzen und in eine Richtung zu der Außenseite des versiegelten Abschnitts hin durch das Paar von Versiegelungsrollen (200) bewegt wird.

9. Versiegelungsverfahren für eine beutelförmige Batteriezelle nach Anspruch 8, wobei sich das Paar von Versiegelungsrollen (200) entlang einer Richtung von der Innenseite zu der Außenseite des versiegelten Abschnitts bewegen, um so einen Abschnitt der inneren Haftschicht (113, 123) in einem geschmolzenen Zustand zu einem äußeren Ende des versiegelten Abschnitts zu bewegen.

10. Beutelförmige Batteriezelle, welche unter Verwendung der Versiegelungsvorrichtung für eine beutelförmige Batteriezelle nach einem der Ansprüche 1 bis 5 hergestellt ist, wobei
die beutelförmige Batteriezelle ein beutelförmiges Batteriegehäuse umfasst, welches eine Laminatbahn umfasst, welche eine äußere Harzschicht (111, 121), eine Metallschicht (112, 122) und eine innere Haftschicht (113, 123) umfasst,
das beutelförmige Batteriegehäuse einen versiegelten Abschnitt aufweist, welcher einen Abschnitt der inneren Haftschicht (113, 123) in einem thermisch fusionierten Zustand umfasst und an äußeren Umfängen eines oberen Gehäuses (110) und eines unteren Gehäuses (120) angeordnet ist, **dadurch gekennzeichnet, dass** der Abschnitt der inneren Haftschicht (113, 123), welcher durch das Paar von Versiegelungsrollen (200) der Versiegelungsvorrichtung für eine beutelförmige Batteriezelle geschmolzen wird, zu einer Innenseite und einer Außenseite des versiegelten Abschnitts gedrückt wird, um eine innere Polykugel und eine äußere Polykugel zu bilden, und
eine Größe der äußeren Polykugel größer als eine Größe der inneren Polykugel ist.

11. Beutelförmige Batteriezelle nach Anspruch 10, wobei eine Endfläche der Metallschicht (112, 122) des beutelförmigen Batteriegehäuses nicht durch die äußere Polykugel freigelegt ist.

## Revendications

1. Appareil pour sceller une cellule de batterie en forme de poche comprenant :
une paire de rouleaux de scellement (200) configurés pour presser et rouler une partie supérieure et une partie inférieure d'une partie étanche d'une cellule de batterie en forme de poche, respectivement,
dans lequel la paire de rouleaux de scellement (200) comprend un premier rouleau de scellement et un second rouleau de scellement,
**caractérisé en ce que** la paire de rouleaux de scellement (200) sont configurés pour sceller la partie étanche tout en se déplaçant dans une direction depuis un intérieur vers un extérieur de la partie étanche.

2. Appareil pour sceller une cellule de batterie en forme de poche selon la revendication 1, dans lequel
le premier rouleau de scellement tourne autour d'un axe de rotation dans une première direction, et
le second rouleau de scellement tourne autour d'un axe de rotation dans une seconde direction opposée à la première direction.

3. Appareil pour sceller une cellule de batterie en forme de poche selon la revendication 1, dans lequel le premier rouleau de scellement et le second rouleau de scellement sont configurés pour presser la partie étanche, les premier et second rouleaux de scellement se trouvant dans un état chauffé.

4. Appareil pour sceller une cellule de batterie en forme de poche selon la revendication 3, dans lequel une température de chauffage de chacun des premier et second rouleaux de scellement est supérieure à une température de fusion d'une couche adhésive interne (113, 123) d'une feuille stratifiée constituant la cellule de batterie en forme de poche.

5. Appareil pour sceller une cellule de batterie en forme de poche selon la revendication 1, dans lequel un diamètre de chacun des premier et second rouleaux de scellement est de 50 % ou moins d'une largeur de la partie étanche.

6. Procédé pour sceller une cellule de batterie en forme de poche en utilisant l'appareil pour sceller une cellule de batterie en forme de poche selon l'une quelconque des revendications 1 à 5, le procédé pour sceller une cellule de batterie en forme de poche comprenant :
(a) le fait de disposer une partie étanche d'une cellule de batterie en forme de poche entre une paire de rouleaux de scellement (200) ;
**caractérisé en ce que** le procédé comprend en outre :
(b) le déplacement de la paire de rouleaux de scellement (200) depuis un intérieur vers un extérieur de la partie étanche tout en faisant tourner indépendamment un premier rouleau de scellement et un second rouleau de scellement constituant la paire de rouleaux de scellement, dans lequel
à l'étape (b), la paire de rouleaux de scellement (200) tourne et est déplacée dans un état chauffé.

7. Procédé pour sceller une cellule de batterie en forme de poche selon la revendication 6, dans lequel
chacun des premier et second rouleaux de scellement présente une vitesse de rotation identique,
dans lequel chacun des premier et second rouleaux de scellement présente une vitesse de déplacement identique,
le premier rouleau de scellement tourne et est déplacé tout en appuyant vers le bas sur la partie étanche, et
le second rouleau de scellement tourne et est déplacé tout en appuyant vers le haut sur la partie étanche.

8. Procédé pour sceller une cellule de batterie en forme de poche selon la revendication 6, dans lequel, dans la partie étanche, une couche adhésive interne (113, 123) d'une feuille stratifiée de la partie étanche est fondue et déplacée dans une direction vers l'extérieur de la partie étanche par la paire de rouleaux de scellement (200).

9. Procédé pour sceller une cellule de batterie en forme de poche selon la revendication 8, dans lequel la paire de rouleaux de scellement (200) se déplace le long d'une direction de l'intérieur vers l'extérieur de la partie étanche, de manière à déplacer une partie de la couche adhésive interne (113, 123) à l'état fondu vers une extrémité externe de la partie étanche.

10. Cellule de batterie en forme de poche fabriquée à l'aide de l'appareil sceller une cellule de batterie en forme de poche selon l'une quelconque des revendications 1 à 5, dans laquelle
la cellule de batterie en forme de poche comprend un boîtier de batterie en forme de poche comportant une feuille stratifiée comprenant une couche de résine externe (111, 121), une couche métallique (112, 122) et une couche adhésive interne (113, 123),
le boîtier de batterie en forme de poche présente une partie étanche comportant une partie de la couche adhésive interne (113, 123) dans un état fusionné thermiquement et disposée au niveau de périphéries externes d'un boîtier supérieur (110) et d'un boîtier inférieur (120),
**caractérisée en ce que** la partie de la couche adhésive interne (113, 123) fondue par la paire de rouleaux de scellement (200) de l'appareil pour sceller une cellule de batterie de type poche est poussée vers un intérieur et un extérieur de la partie étanche pour former une bille de polymère interne et une bille de polymère externe, et
une taille de la bille de polymère externe est supérieure à une taille de la bille de polymère interne.

11. Cellule de batterie en forme de poche selon la revendication 10, dans laquelle une surface d'extrémité de la couche métallique (112, 122) du boîtier de batterie en forme de poche n'est pas exposée par la bille de polymère externe.
